# NOUVEAU FASCICULE DE BREVET EUROPEEN

(11) **EP 0 313 429 B2**
(45) Date de publication et mention de la décision concernant l'opposition: **22.03.1995**
(45) Mention de la délivrance du brevet: 02.01.1992
(21) Numéro de dépôt: 88402507.3
(22) Date de dépôt: 04.10.1988
(51) Int. Cl.: B23D 55/08, B23D 55/06, B23Q 11/04

(54) **Machine à scier à ruban**
Bandsägemaschine
Band saw machine

(30) Priorité: 20.10.1987 FR 8714438
(43) Date de publication de la demande: 26.04.1989
(73) Titulaire: MISSLER Société à Responsabilité Limitée, F-91000 Evry (FR)
(72) Inventeur: MISSLER Société à Responsabilité Limitée, F-91000 Evry (FR)
(74) Mandataire: Boutin, Antoine

(56) Documents cités:
- DE-A- 3 022 659
- DE-A- 3 027 360
- DE-B- 2 129 813
- DE-C- 735 485
- FR-A- 2 556 258
- GB-A- 2 052 107
- Zeitschrift "ind. Fertigung" 71, Nr. 3, S. 170 (1981)

## Description

La présente invention concerne les machines à scier à ruban qui sont destinées à être employées pour scier des pièces métalliques, telles que des barres en métal ou similaires.

Dans le cas de machines à ruban horizontal, celles-ci comportent un ensemble mobile de travail disposé au dessus de l'emplacement prévu pour la pièce à scier, cet ensemble comprenant le ruban de scie ainsi que son dispositif d'entraînement. La pénétration du ruban de scie s'effectue sous l'effet du déplacement vertical de l'ensemble de travail sous l'action de son seul poids. Cependant ce mouvement, qui détermine la vitesse de pénétration du ruban de scie, est freiné par un dispositif hydraulique comportant un circuit de fuite pourvu d'un régulateur du débit d'écoulement.

En général les machines de ce genre comportent des systèmes de sécurité ayant pour rôle d'arrêter leur fonctionnement en cas de surcharge du ruban ou de rupture de celui-ci. Ainsi, le brevet FR 2.556.258 décrit une machine à scier dans laquelle il est prévu un palpeur disposé au contact du dos du ruban de scie et qui est susceptible d'agir sur un dispositif provoquant l'arrêt de la descente de l'ensemble mobile au cas où l'effort exercé sur ce palpeur dépasse une charge déterminée. De plus, il est prévu, entre ce palpeur et le dispositif commandé par celui-ci, un élément intermédiaire apte à assurer une modification des conditions d'action du palpeur sur l'organe d'arrêt de l'ensemble mobile, en fonction de la largeur de la pièce à scier.

Cependant ceci ne permet pas d'obtenir une sécurité suffisante de fonctionnement des machines à acier du type en cause. En effet il convient que l'effort de coupe ne dépasse jamais les possibilités de résistance mécanique du corps du ruban de scie, ni les possibilités d'entraînement par friction de ce ruban. Or quand beaucoup de dents du ruban se trouvent en prise, il en résulte un accroissement de la résistance opposée à l'entraînement de celui-ci. Ceci est de nature à entraîner la détérioration rapide de ce ruban et sa rupture.

Pour remédier à cet inconvénient, il a déjà été proposé d'équiper les machines à scier de ce genre, d'un dispositif électronique de régulation apte à assurer l'ajustement de la vitesse de défilement du ruban en fonction des efforts supportés par celui-ci. Cependant un tel dispositif est particulièrement complexe et coûteux. Par ailleurs son emploi est peu aisé.

C'est pourquoi la présente invention a pour objet une machine à scier comportant un système de régulation de conception très simple et qui est susceptible d'assurer automatiquement une sécurité satisfaisante de fonctionnement en cas d'accroissement de la résistance opposée à l'entraînement du ruban à scier.

Cette machine à scier à ruban comporte, en regard de l'emplacement prévu pour la pièce à scier, un ensemble comprenant le ruban de scie et son dis positif d'entraînement lequel ensemble est mobile en direction de la pièce à scier en ayant sa vitesse de déplacement freinée par un circuit hydraulique comportant un clapet susceptible de limiter, ou même éventuellement d'interrompre, l'écoulement du débit caractérisée en ce qu'en regard de clapet il est prévu un organe de commande de nature non électronique et/ou non électrique qui est associé aux moyens - mécaniques, hydrauliques ou autres - d'actionnement du volant d'entraînement du ruban de scie de façon à être apte à agir sur le clapet correspondant du circuit hydraulique de freinage en cas d'un accroissement de la résistance s'opposant au couple d'entraînement du ruban de scie, afin qu'un tel accroissement provoque une limitation du débit d'écoulement dans le circuit hydraulique de freinage, et par suite une réduction de la vitesse de déplacement de l'ensemble mobile de travail.

Ainsi, cette réduction de vitesse entraîne automatiquement la réduction de la résistance opposée à l'avance du ruban de scie, donc une régulation automatique. Ceci permet d'éviter les incidents qui se produiraient sans une telle régulation.

Dans une forme de réalisation avantageuse de la présente machine, le volant d'entraînement du ruban de scie est entraîné en rotation par un organe d'entraînement agissant sur lui par l'intermédiaire d'un ressort de tension réglable, le clapet de limitation du débit dans le circuit hydraulique de freinage étant disposé de façon à être actionné par cet organe d'entraînement, au cas où la résistance opposée au couple d'entraînement dépasse la valeur pour laquelle est réglée le ressort.

Cette forme de réalisation convient particulièrement dans le cas où le volant d'entraînement du ruban de scie est entraîné par un moteur électrique. Cependant cet entraînement peut également être assuré par un moteur hydraulique, auquel cas il est prévu, sur le circuit d'alimentation de ce moteur, une dérivation aboutissant à un vérin disposé en regard du clapet de limitation de débit prévu dans le circuit hydraulique de freinage de la vitesse de déplacement de l'ensemble mobile de travail.

D'autres particularités et avantages de la machine à scier selon l'invention apparaîtront au cours de la description suivante. Celle-ci est donnée en référence au dessin annexé à simple titre indicatif, et sur lequel :
La figure 1 est une vue schématique en élévation de face d'une machine à scier selon l'invention.
Les figures 2 et 3 sont des vues partielles en coupe, respectivement suivant les lignes II-II et III-III de la figure 1, mais à échelle différente.
La figure 4 représente le schéma hydraulique de fonctionnement prévu dans une autre forme de réalisation de la machine à scier selon l'invention.

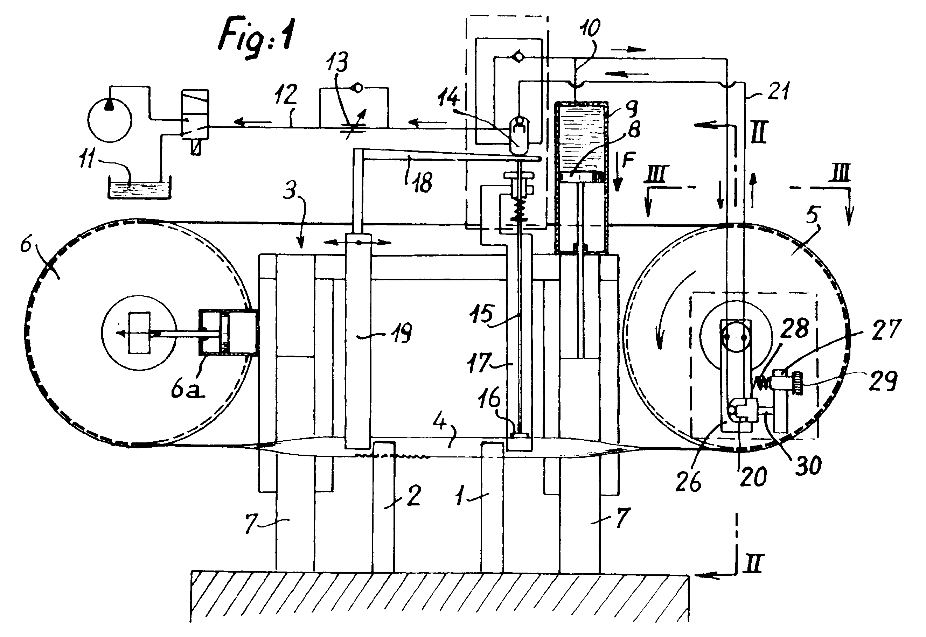

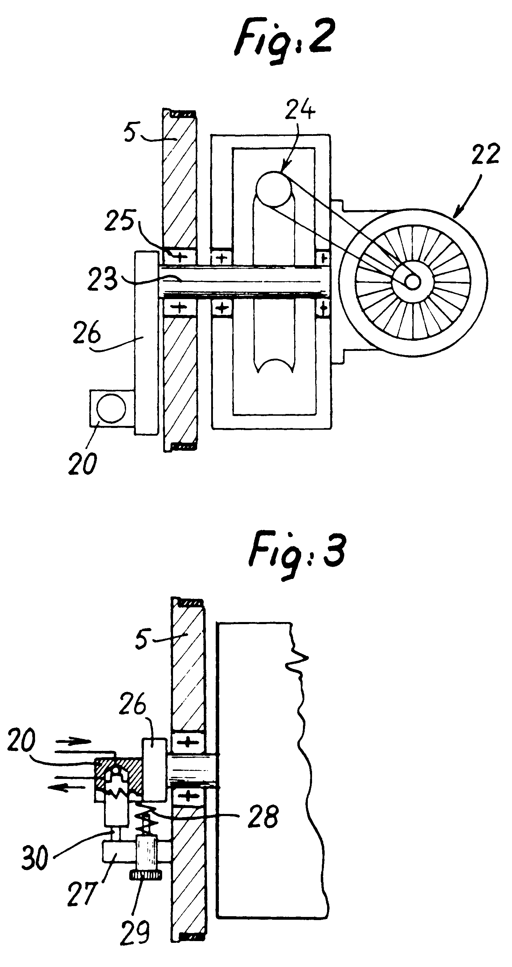

La machine à scier représentée aux figures 1 à 3 est du type dans lequel le ruban de scie est disposé horizontalement dans sa zone de travail. A l'emplacement prévu pour la pièce à scier, cette machine comporte un étau d'immobilisation comprenant deux mâchoires fixes 1 et deux mâchoires mobiles 2. Ces dernières sont montées sur des glissières (non représentées), ce qui permet de régler leur position en fonction de la largeur de la pièce à scier.

Au-dessus de cet étau, il est prévu un ensemble mobile de travail désigné par la référence générale 3, lequel comprend le ruban de scie 4 et son dispositif d'entraînement, en l'occurrence un volant d'entraînement 5 et un volent 6 de renvoi et de tension. Ces deux volants sont disposés dans un même plan vertical de part et d'autre de deux colonnes verticales 7 faisant partie du bâti et sur lesquelles coulisse l'ensemble mobile de travail 3. Le volant tendeur 6 est monté coulissant sur une glissière horizontale et un vérin hydraulique 6a agit sur celui-ci pour assurer la mise sous tension du ruban de scie 4. Quant au volant 5, il est entraîné en rotation par l'intermédiaire d'un dispositif particulier qui sera décrit en détail par la suite.

L'agencement est tel que l'ensemble mobile 3 de travail coulisse librement sur les deux colonnes 7 de façon que sa descente s'effectue sous l'effet de son seul poids. Cependant ce mouvement est freiné par un dispositif hydraulique comportant un piston fixe 8 logé à l'intérieur d'un cylindre 9 solidaire du châssis de l'ensemble mobile 3. La partie supérieure de ce cylindre est remplie d'huile et celle-ci se trouve expulsée hors de ce cylindre lors de la descente de l'ensemble mobile 3 selon la flèche F. L'évacuation du fluide s'effectue à travers la conduite de fuite 10 branchée sur l'extrémité supérieure du cylindre 9 et qui aboutit à un réservoir 11 par l'intermédiaire d'une autre conduite 12. Or celle-ci comprend un organe 13 de réglage du débit d'écoulement. C'est donc cet organe qui détermine l'importance du freinage de l'ensemble mobile 3, et par suite la vitesse de son mouvement de descente.

De même que dans la machine à scier décrite dans le brevet FR 2.556.258, il est prévu, sur ce circuit hydraulique de freinage, un système de sécurité apte à provoquer l'arrêt de l'ensemble mobile 3 en cas de surcharge du ruban de scie 4. Ce système comprend un dispositif 14 d'obturation du circuit hydraulique de freinage, lequel est branché dans la conduite 12. Ce dispositif est susceptible d'être actionné par une tige verticale 15 dont l'extrémité inférieure porte un palpeur 16 situé au contact du dos du ruban 4 de scie. Cette tige est portée par un bras vertical 17 dont l'extrémité constitue l'un des guides du ruban de scie.

Cependant un élément intermédiaire est interposé entre le dispositif 14 formant clapet et l'extrémité supérieure de la tige coulissante 15 afin de modifier les conditions d'actionnement du palpeur en fonction de la largeur de la pièce à scier. Cet élément intermédiaire est constitué par l'extrémité libre d'un barreau horizontal 18 fixé en port-à-faux sur l'extrémité supérieure d'un bras vertical 19 dont l'extrémité inférieure constitue le second organe de guidage du ruban de scie 4. Or ce second bras vertical est monté mobile dans le sens transversal sur le châssis de l'ensemble mobile 3 et il est soumis à l'action de moyens élastiques de poussée (non représentés) qui le maintiennent en place contre les mâchoires mobiles 2 de l'étau de serrage. Ainsi, la position de ce bras vertical 19 est directement fonction de la largeur de la pièce à scier. Il en est donc de même pour le barreau horizontal 18. Or celui-ci comporte une rampe constituant une came dont le profil est apte à assurer une modification des conditions d'actionnement du palpeur 16 sur le clapet d'obturation 14 en fonction de la largeur de la pièce à scier. Comme exposé dans brevet FR 2.556.258, le système ainsi constitué est en mesure d'assurer la sécurité voulue en cas d'accroissement de la résistance opposée à la pénétration du ruban de scie dans la pièce à scier.

Cependant, comme indiqué dans le préambule de la présente demande, ceci est insuffisant pour réaliser toutes les conditions nécessaires de sécurité. C'est pourquoi la présente machine est équipée d'un système d'auto-régulation destiné à entrer en action en cas d'accroissement de la résistance opposée à l'entraînement du ruban à scier, ce qui est un phénomène tout à fait différent de celui d'une augmentation de la résistance à la pénétration du ruban de scie dans la matière de la pièce à scier.

Ce système d'auto-régulation est conçu pour agir sur le circuit de freinage de l'ensemble mobile 3 de façon à assurer la réduction de la vitesse de descente, dans le cas où il se produit une augmentation trop importante de la résistance opposée à l'entraînement du ruban de scie 4. Ce système d'auto régulation comprend un clapet 20 inséré dans une conduite 21 qui assure le raccordement de la conduite 10 de sortie du cylindre 9 avec la conduite 12 aboutissant au réservoir 11. Ce clapet est apte à assurer la réduction du débit d'écoulement ou même éventuellement l'arrêt de celui-ci. Or ce clapet est commandé par un moyen sensible à un accroissement de la résistance s'opposant au couple d'entraînement du ruban de scie 4.

Dans l'exemple représenté aux figures 1 à 3, le volant d'entraînement 5 du ruban de scie est entraîné à partir d'un moteur électrique 22. Celui-ci est accouplé avec un arbre moteur 23 par l'intermédiaire d'un système d'accouplement 24 à vis sans fin et roue tangente. Mais le volant d'entraînement 5 n'est pas accouplé directement en rotation avec l'arbre moteur 23, car il est libre par rapport à celui-ci du fait de son montage sur des roulements 25 prévus autour de cet arbre.

L'entraînement en rotation du volant 5 est assuré par l'intermédiaire d'un bras radial 26 porté par l'extrémité libre de l'arbre 23 et qui est disposé en regard de l'une des faces de ce volant. L'extrémité libre de ce bras prend appui sur une butée 27 portée parle volant 5, ce qui assure l'entraînement en rotation de celui-ci. Cependant le bras radial 26 ne prend pas appui directement sur la butée 27, mais par l'intermédiaire d'un ressort 28 dont la tension initiale est réglable par manoeuvre d'une vis 29. Or le corps du clapet 20 de sécurité est lui-même fixé sur le bras radial 26 en regard d'un poussoir 30 porté par la butée 27, ou directement par le volant 5. La liaison du corps du clapet 20 au circuit hydraulique est assuré par un raccord tournant (non représenté).

Du fait de l'agencement prévu, le bras radial 26 assure l'entraînement du volant 5 tant qu'une résistance normale s'oppose au couple d'entraînement du ruban de scie 4. Cependant lorsqu'il se produit une résistance anormale à l'encontre du défilement du ruban, le ressort 28 est amené à céder, ce qui provoque l'actionnement du clapet 20 par le poussoir 30 porté par la butée 27. En conséquence il se produit une réduction du débit d'écoulement dans la conduite 21, et par suite une réduction de la vitesse de descente de l'ensemble mobile 3 de travail. Bien entendu, la vis 29 permet de régler à volonté les conditions dans lesquelles s'effectue l'actionnement du clapet 20.

La réduction de la vitesse de descente de l'ensemble mobile de travail 3, en cas d'augmentation anormale de la résistance opposée au couple d'entraînement du ruban de scie 4, provoque automatiquement une réduction de cette résistance. Il se produit donc ainsi une régulation automatique. Ceci assure donc une parfaite sécurité en évitant les incidents qui sans cela se produiraient en cas d'augmentation trop importante de la résistance opposée au défilement du ruban de scie.

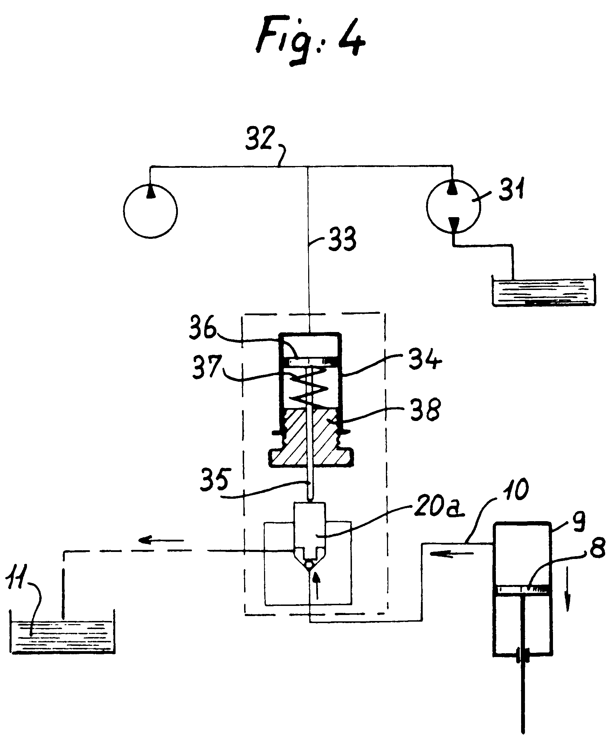

La figure 4 illustre le schéma hydraulique de fonctionnement prévu dans une autre forme de réalisation de la machine à scier selon l'invention. Il s'agit d'un forme de réalisation particulière dans laquelle le volant d'entraînement du ruban de scie est entraîné par un moteur hydraulique 31, et non plus par un moteur électrique comme dans la forme de réalisation précédemment décrite.

Cependant comme précédemment il est prévu, dans le circuit hydraulique de freinage de l'ensemble mobile 3 de travail, un clapet 20a destiné à réduire le débit d'écoulement, ou même à arrêter celui-ci, en cas d'augmentation anormale de la résistance opposée au défilement du ruban de scie 4.

Dans cette forme de réalisation particulière, le circuit hydraulique 32 d'alimentation du moteur hydraulique 31 comporte un dérivation 33 aboutissant à un vérin 34. La tige 35 du piston 36 de celui-ci est disposée en regard d'un clapet de régulation 20a de façon à actionner ce dernier lorsqu'il se produit une augmentation de pression dans le circuit 32 d'alimentation du moteur 31, donc lorsqu'il survient une augmentation anormale de la résistance opposée au défilement du ruban de scie.

Dans les conditions normales de fonctionnement, le piston 36 est empêché de se déplacer par un ressort 37 prennant appui sur un bouchon vissé 38 qui obture l'extrémité correspondante du corps du vérin 34. Ainsi par manoeuvre de ce bouchon, on peut régler les conditions exactes dans lesquelles le clapet 20a se trouve actionné, de façon à obtenir la régulation de la vitesse de descente de l'ensemble mobile 3 de travail en fonction de la résistance opposée au défilement du ruban de scie 4. Dans ces conditions on obtient le même résultat que dans la forme de réalisation précédemment décrite.

Cependant la nature du moyen agissant sur le clapet 20 ou 20a de limitation du débit de fuite dans le circuit de freinage pourrait être encore différente, pour autant que ce moyen soit sensible à une augmentation anormale de la résistance opposée au défilement du ruban de scie. Ainsi dans le cas de la forme de réalisation selon les figures 1 à 3, il serait possible de prévoir une solidarisation directe en rotation du volant 5 avec son arbre moteur 23, en association avec une possibilité de déplacement axial de la vis sans fin faisant partie de l'accouplement 24, le clapet 20 de limitation de débit étant disposé en regard de cette vis de façon à se trouver actionné par elle dans le cas où une augmentation de la résistance opposée au défilement du ruban provoquerait, par réaction, un déplacement axial de celle-ci. Ceci permettrait d'obtenir le même résultat que précédemment. Mais encore une fois il serait possible de prévoir d'autres solutions mécaniques, hydrauliques ou autres. Dans le cas de la forme de réalisation représentée aux figures 1 à 3, il serait possible de disposer le clapet de sécurité 20 en un autre point en prévoyant un actionnement de celui-ci par l'intermédiaire d'un circuit hydraulique auxiliaire asservi à un appareil de commande, à cylindre et piston, monté sur le bras radial 26 pour être actionné par le poussoir 30.

Comme décrit précédemment la machine selon l'invention présente l'avantage qu'une augmentation anormale de la résistance opposée au défilement du ruban de scie entraîne automatiquement une réduction de la vitesse de déplacement de l'ensemble mobile de travail. Cependant ce système de sécurité et de régulation présente l'avantage supplémentaire de pouvoir être combiné avec le dispostif de sécurité fonctionnant sous l'effet d'une surcharge subi par ce même ruban, comme cela est du reste le cas pour la machine selon les figures 1 à 3. On obtient donc une parfaite sécurité de fonctionnement de la machine à scier ainsi équipée.

Toutefois la machine à scier selon l'invention pourrait fort bien ne comporter que le seul système d'auto-régulation intervenant en cas d'augmentation de la résistance s'opposent à l'avancement du ruban de scie.

Enfin il convient de noter que la machine à scier selon l'invention n'est pas obligatoirement du type à ruban horizontal. En effet le ruban de scie peut fort bien être disposé verticalement en regard de l'étau d'immobilisation de la pièce à scier. Le déplacement de l'ensemble mobile est alors assuré par presion hydraulique, et la vitesse de déplacement est freinée parle même disposif de sécurité que celui décrit précédemment.

## Revendications

1. Machine à scier à ruban comportant, en regard de l'emplacement prévu pour la pièce à scier, un ensemble (3) comprenant le ruban de scie (4) et son dispositif d'entraînement, lequel ensemble (3) est mobile en direction de la pièce à scier en ayant sa vitesse de déplacement freinée par un circuit hydraulique (10, 12, 21) comportant un clapet (20, 20a) susceptible de limiter ou même d'interrompre l'écoulement du débit, caractérisée en ce qu'en regard de ce clapet (20, 20a), il est prévu un organe de commande (30) de nature non électronique et/ou non électrique qui est associé aux moyens - mécaniques, hydrauliques ou autres - d'actionnement du volant (5) d'entraînement du ruban de scie (4), de façon à être apte à agir sur le clapet correspondant (20, 20a) du circuit hydraulique de freinage en cas d'un accroissement de la résistance s'opposant au couple d'entraînement du ruban de scie (4), afin qu'un tel accroissement provoque une limitation du débit d'écoulement dans le circuit hydraulique de freinage, et par suite une réduction de la vitesse de déplacement de l'ensemble mobile de travail (3).

2. Machine à scier selon la revendication 1, caractérisée en ce que le volant (5) d'entraînement du ruban de scie (4) est entraîné en rotation par un organe d'entraînement (26) agissant sur lui par l'intermédiaire d'un ressort (28) de tension réglable, le clapet (20) de limitation du débit dans le circuit hydraulique de freinage étant disposé de façon à être actionné par cet organe d'entraînement, au cas ou la résistance opposée au couple d'entraînement dépasse la valeur pour laquelle est réglée le ressort (28).

3. Machine à scier selon la revendication 2, caractérisée en ce que le volant (5) d'entraînement du ruban de scie (4) est monté librement rotatif autour de son arbre d'entraînement (23) et celui-ci porte un bras radial (26) prennant appui, par l'intermédiaire d'un ressort (28) de tension réglable, sur une butée fixe (27) prévue sur le volant d'entraînement, le clapet (20) de limitation de débit étant porté par le bras d'entraînement (26) en étant disposé en regard d'un organe d'actionnement (30) prévu sur le volant (5) d'entraînement du ruban de scie.

4. Machine à scier selon la revendication 1, caractérisée en ce que le volant (5) d'entraînement du ruban de scie (4) étant entraîné par un moteur hydraulique (31), il est prévu, sur le circuit (32) d'alimentation de ce moteur, une dérivation (33) aboutissent à un vérin (34) disposé en regard du clapet (20a) de limitation de débit prévu dans le circuit hydraulique de freinage de la vitesse de déplacement de l'ensemble mobile de travail.

## Claims

1. A bandsaw machine comprising, in registry with the location provided for the workpiece to be sawn, an assembly (3) comprising the saw band (4) and its driving device, this assembly (3) being movable towards the workpiece while its displacement velocity is slowed down by an hydraulic circuit (10, 12, 21) comprising a valve (20, 20a) capable of limiting or even of interrupting the liquid flow, characterized in that there is provided in registry with this valve meter (20, 20a) a control meter (30) of a non electronic and/or non electrical type which is associated with the means
- mechanical, hydraulic or others - provided for driving the flywheel (5) which drives the saw band (4), so as to be capable of actuating the corresponding valve (20, 20a) of the hydraulic braking circuit in the case of an increase of the resistance opposing the driving torque of the saw band (4), in order that such an increase will cause a limitation of the outflow rate in the hydraulic braking circuit and hence a limitation of the displacement velocity of the movable working assembly (3).

2. A bandsaw machine according to Claim 1, characterized in that the flywheel (5) driving the saw band (4) is driven in rotation by a driving member (26) acting upon said flywheel through the intermediary of an adjustable tension spring (28), the flow-limiting valve (20) in the hydraulic braking circuit being disposed so as to be actuated by said driving member (26) in case the resistance opposed to the driving torque exceeds the value for which the spring (28) is set.

3. A bandsaw machine according to Claim 2, characterized in that the flywheel (5) driving the saw band (4) is mounted so as to rotate freely about its driving shaft (23), this shaft carrying a radial arm (26) resting, through the intermediary of an adjustable tension spring (28), against a fixed stop (27) arranged on the driving flywheel, the valve (20) provided for limiting the liquid flow being carried by the radial arm (26) and being disposed in registry with an actuating member (30) provided on the flywheel (5) which drives the saw band.

4. A bandsaw machine according to Claim 1, characterized in that, while the flywheel (5) driving the saw band (4) is driven by an hydraulic motor (31), there is provided in the circuit (32) feeding this motor, a pipe branch (33) leading to a jack cylinder (34) disposed in registry with the valve plug (20a) provided for limiting the liquid flow in the hydraulic braking circuit for restricting the displacement velocity of the movable working assembly.

## Patentansprüche

1. Bandsägemaschine mit einer relativ zur Stelle an dem zu sägenden Werkstück gegenüberliegenden Einheit (3), mit dem Bandsägeblatt (4) und seinem Antrieb, wobei die Einheit (3) in Richtung auf das Werkstück beweglich vorgesehen ist und die Bewegungsgeschwindigkeit durch einen Hydraulikkreis (10, 12, 21) mit einem Ventil (20, 20a) zum Begrenzen oder sogar Unterbrechen des Durchflusses abgebremst wird, dadurch gekennzeichnet, daß ein relativ zu dem Ventil (20, 20a) gegenüberliegendes Steuerorgan (30) aus einer nicht elektronischen und/oder nicht elektrischen stur in Verbindung mit mechanischen, hydraulischen oder anderen Mitteln für die Betätigung des Antriebsrads (5) des Bandsägeblatts (4) vorgesehen ist, um auf das entsprechende Ventil (20, 20a) des hydraulischen Bremskreises bei einem Anstieg des Widerstands gegensätzlich auf das Antriebsmoment des Bandsägeblatts (4) in der Weise einzuwirken, daß ein solcher Anstieg eine Begrenzung des Durchflusses in dem hydraulischen Bremskreis hervorruft, damit eine Verringerung der Bewegungsgeschwindigkeit der beweglichen Einheit (3) eintritt.

2. Bandsägemaschine nach Anspruch 1, dadurch gekennzeichnet, daß das Antriebsrad (5) des Bandsägeblatts (4) über ein Antriebsorgan (26) angetrieben ist, das unter Zwischenschaltung einer in ihrer Spannung einstellbaren Feder (28) darauf einwirkt, und daß das Ventil (20) zur Begrenzung des Durchflusses in dem hydraulischen Bremskreis so angeordnet ist, daß es durch das Antriebsorgan betätigt wird, und zwar, wenn der dem Antriebsmoment entgegengerichtete Widerstand den an der Feder (28) eingestellten Wert übersteigt.

3. Bandsägemaschine nach Anspruch 2, dadurch gekennzeichnet, daß das Antriebsrad (5) des Bandsägeblatts (4) frei drehbar auf seiner Antriebswelle (23) gelagert ist, und diese einen radialen Arm (26) trägt, der unter Zwischenschaltung einer in ihrer Spannung einstellbaren Feder (28) auf einen festen Anschlag (27) einwirkt, der auf dem Antriebsrad vorgesehen ist, und daß das Ventil (20) zur Begrenzung des Durchflusses auf dem radialen Arm (26) angeordnet und über ein auf dem Antriebsrad (5) des Bandsägeblatts angeordnetes Betätigungsorgan (30) betätigbar ist.

4. Bandsägemaschine nach Anspruch 1, dadurch gekennzeichnet, daß in Verbindung mit dem über einen Hydraulikmotor (31) angetriebenen Antriebsrad (5) des Bandsägeblatts (4) in der Zuflußleitung (32) zu diesem Hydraulikmotor eine Abzweigleitung (33) vorgesehen ist, die zu einem Hydraulikzylinder (34) führt, der relativ zu dem Ventil (20a) für die Begrenzung des Durchflusses in dem hydraulischen Bremskreis für die Bewegungsgeschwindigkeit der beweglichen Einheit gegenüberliegend angeordnet ist.
